# EUROPÄISCHE PATENTANMELDUNG

(11) **EP 2 288 053 A1**
(43) Veröffentlichungstag der Anmeldung: **23.02.2011**
(21) Anmeldenummer: 09168185.8
(22) Anmeldetag: 19.08.2009
(51) Int. Cl.: H04B 10/00

(54) **Optischer Empfänger zum Empfangen von Licht**

(71) Anmelder: Mechaless Systems GmbH, 76131 Karlsruhe (DE)
(72) Erfinder: Melcher, Dr. Rolf, 76227 Karlsruhe (DE)
(74) Vertreter: Durm & Partner

(57) **Zusammenfassung**

Die vorliegende Erfindung betrifft einen optischen Empfänger (1) zum Empfang von Wechsellicht-Nutzsignalen und zur Speicherung elektrischer, aus Fremdlicht gewonnener Energie, der eine Photodiode (2) zum Empfang von Licht, das Fremdlicht und einen im Vergleich zum Fremdlicht höherfrequenten Wechsellicht-Nutzsignalanteil aufweist, und zur Umwandlung des Lichts in einen Photostrom (I_{P}), der einen Nutzsignalstrom (I_{N}) und einen Fremdlichtstrom (I_{F}) umfasst, eine Kopplungseinheit (3) zum Entkoppeln und Trennen des Nutzsignalstroms, der von dem optischen Wechsellicht-Nutzsignalanteil erzeugt wurde, von dem Fremdlichtstrom, der von dem Fremdlicht erzeugt wurde, eine Verstärkereinheit (4) zum Verstärken des Nutzsignalstroms und eine Energiespeichereinheit (5), die wenigstens einen Kondensator (7) einschließt und die durch den Fremdlichtstrom geladen wird, umfasst, wobei die in der Energiespeichereinheit (5) geladene Energie zur wenigstens teilweisen Energieversorgung des optischen Empfängers (1) und/oder zur wenigstens teilweisen Energieversorgung einer den optischen Empfänger (1) umfassenden Messanordnung (16) verwendet wird.

## Beschreibung

Die vorliegende Erfindung betrifft einen optischen Empfänger zum Empfangen von Wechsellicht-Nutzsignalen und zur Speicherung elektrischer, aus Fremdlicht gewonnener Energie mit einer Photodiode zum Empfang von Licht und zur Umwandlung des Lichts in einen Photostrom. Das empfangene Licht umfasst Fremdlicht und einen im Vergleich zum Fremdlicht höherfrequenten Wechsellicht-Nutzsignalanteil, der von einer ein Nutzsignal aussendenden Lichtquelle erzeugt wird. Der aus der Umwandlung des Lichts hervorgehende Photostrom umfasst einen Nutzsignalstrom und einen Fremdlichtstrom.

Die Erfindung betrifft auch eine optoelektronische Messanordnung mit einer Fremdlichtkompensation umfassend eine Nutzsignallichtquelle und eine Kompensationslichtquelle, einen optischen Empfänger mit einer Photodiode und einer Verstärkereinheit und eine Fremdlichtkompensationsschaltung. Die Erfindung betrifft weiterhin ein Verfahren zur Speicherung elektrischer, aus Fremdlicht gewonnener Energie und zum Empfang optischer WechsellichtNutzsignale.

Optische Sensoren empfangen Licht, das neben dem aktiv ausgesendeten Licht einer Nutzsignal-Lichtquelle auch das in der Umgebung herrschende Fremdlicht, insbesondere das Tageslicht aufweist. Das empfangene Umgebungslicht ist im Allgemeinen wesentlich stärker als der von den Nutzsignal-Lichtquellen ausgestrahlte Lichtanteil.

Derartige optische Empfänger werden beispielsweise als Teile von aktiven optischen Sensoren eingesetzt, die neben dem Empfänger auch eine Lichtquelle umfassen und Licht aussenden. Das von den optischen Sensoren ausgesandte Licht wird nach Reflektion an "beleuchteten" Objekten reflektiert und empfangen, wodurch Informationen über diese "beleuchteten" Objekte gewonnen werden können. Da auch hier der Anteil des Umgebungslichts deutlich größer ist als der Nutzsignallichtanteil werden die Sensoren z. B. so abgeschirmt und abgeschattet, dass möglichst wenig Umgebungslicht zum optischen Empfänger gelangt. Einen anderen Weg beschreiten optische Sensoren, die über eine Fremdlichtkompensationsschaltung verfügen. Solche optischen Sensoren oder optischen Empfänger sind beispielsweise aus den folgenden Anmeldungen bekannt:
EP 0 706 648 A1
DE 101 33 823
DE 28 49 186
DE 103 00 223 A1

Das Umgebungslicht enthält keine Nutzinformation für die Auswertung des Nutzsignals, insbesondere für das Erkennen von entfernten Objekten und/oder deren Lage. Aufgrund der hohen Lichtintensität entsteht in der Photodiode des Empfängers ein hoher Photostrompegel, der den Empfangsverstärker derartiger Sensoren in die Sättigung treiben würde. Deshalb wird der Fremdlicht- oder Umgebungslichtanteil des Photostroms unterdrückt, bevor der Nutzsignalanteil des Photostroms verstärkt wird. Dabei wird ausgenutzt, dass das Umgebungslicht niederfrequent gegenüber dem Nutzsignal ist. Beispielsweise weist das von künstlicher Beleuchtung hervorrufende Licht häufig eine Frequenz von 50 Hz oder 60 Hz und deren Harmonischen auf. Das natürliche Umgebungslicht bzw. das Sonnenlicht führt zu einem Gleichstromanteil im Photostrom.

In optischen Empfängern wird die Photodiode häufig in Sperrrichtung gepolt, wodurch der Photostrom im einfachsten Fall über einen Widerstand zur Spannungsversorgung hin abgeführt wird. Dies hat jedoch den Nachteil, dass durch diese Schaltungsart der Photostrom den Leistungsverbrauch der gesamten Schaltung erhöht, da die in Sperrrichtung geschaltete Photodiode nicht als Quelle, sondern als "Senke" arbeitet und der durch das Umgebungslicht hervorgerufene Photostromanteil von der Spannungsversorgung erzeugt werden muss.

Um eine Belastung der Spannungsversorgung durch den vom Umgebungslicht hervorgerufenen Photostrom zu minimieren, hat es sich deshalb als vorteilhaft erwiesen, die Photodiode in Vorwärtsrichtung zu betreiben. In dieser Schaltungsart wird zumindest nicht die Spannungsversorgung des Sensors belastet.

Aus dem Stand der Technik ergibt sich somit die Aufgabe, einen möglichst energieeffizienten optischen Empfänger zur Verfügung zu stellen, mit dem die Betriebsdauer eines optischen Sensors, insbesondere bei Versorgung mit einer Batterie deutlich erhöht werden kann.

Diese Aufgabe wird durch einen optischen Empfänger mit den Merkmalen des Anspruchs 1, eine optoelektronische Messanordnung mit den Merkmalen des Anspruchs 12 und durch ein Verfahren mit den Merkmalen des Anspruchs 14 gelöst.

Der erfindungsgemäße optische Empfänger wird zum Empfang von Wechsellicht-Nutzsignalen und zur Speicherung elektrischer Energie, die aus dem Fremdlichtanteil des empfangenen Lichts gewonnen wird, verwendet. Die Erfindung geht also davon aus, dass der optische Empfänger in Umgebungen eingesetzt wird, in denen das Umgebungslicht nicht abgeschirmt ist, sondern von dem Empfänger ebenfalls empfangen wird. Eine in dem Empfänger umfasste Photodiode empfängt das Licht, das Fremdlicht und einen im Vergleich zum Fremdlicht höherfrequenten Wechsellicht-Nutzsignalanteil aufweist, und wandelt das Licht in einen Photostrom um, der entsprechend einen Fremdlichtstrom und einen Nutzsignalstrom umfasst. Der Nutzsignalstrom hat eine höhere Frequenz als der Fremdlichtstrom, der, wenn er von dem natürlichen Umgebungslicht hervorgerufen wird, ein Gleichstrom ist.

Um den Nutzsignalstrom von dem Fremdlichtstrom zu trennen, macht sich die Erfindung die Erkenntnis zunutze, dass die Photodiode in Vorwärtsrichtung betrieben werden kann, solange die Photodiode nicht in ihre Sättigung gelangt. In dieser Schaltungsvariante wird die Versorgungsspannung durch die Photodiode nicht belastet. Allerdings muss eine entsprechende Vorwärtsspannung der Photodiode, die unterhalb der Sättigungsspannung liegt, eingeregelt werden. Aus der DE 44 31 117 C2 ist eine Art der Arbeitspunkteinstellung bekannt, bei der eine variable Last parallel zur Photodiode geschaltet ist.

Im Rahmen der Erfindung wurde erkannt, dass durch eine geeignete Beschaltung der Photodiode in Vorwärtsrichtung auch der von dem Umgebungslicht hervorgerufene Photostrom verwendet werden kann, um die Effizienz der gesamten Anordnung, insbesondere des optischen Empfängers zu erhöhen. Dazu umfasst der optische Empfänger eine Kopplungseinheit, in der der Nutzsignalstrom, der auf dem optischen Wechsellicht-Nutzsignalanteil des Lichts beruht, von dem Fremdlichtstrom, der auf dem empfangenen Fremdlicht beruht, entkoppelt und getrennt wird. Der Nutzsignalstrom wird in einer Verstärkereinheit verstärkt, damit er dann einer Auswertereinheit zur Auswertung und Weiterverarbeitung zur Verfügung steht. Die Verstärkereinheit umfasst bevorzugt einen Hochpaß-Filter oder einen Bandpaß-Filter, damit niederfrequente Signale herausgefiltert und nicht verstärkt werden.

Die Koppelungseinheit hat die Aufgabe den niederfrequenten Photostromanteil vom höherfrequenten Nutzsignalstrom zu trennen. Dies kann mit Hilfe eines induktiven Übertragers geschehen. Die Primärseite der Spule ist hierbei für den niederfrequenten Stromanteil durchlässig, während der hochfrequente Anteil auf die Sekundärseite übertragen wird. Da je nach Nutzfrequenz für die Signalauftrennung große Induktivitäten erforderlich werden und außerdem Spulen sich nur schlecht in integrierten Schaltungen (IC) realisieren lassen ist es vorteilhaft die Spule durch einen Gyrator zu ersetzen.

Ein Gyrator ist eine Transformationsschaltung, mit der eine beliebige Impedanz in ihre dazu duale Impedanz umgewandelt werden kann. Beispielsweise lässt sich mit Hilfe einer Kapazität ein Zweipol realisieren, der sich nach außen wie eine Induktivität verhält. Beispielsweise kann die Energiespeicherregelung zur Steuerung der Energiespeichereinheit einen Gyrator umfassen. Unter Gyrator wird dabei eine Schaltungsanordnung verstanden, die beispielsweise aus einem so genannten Transkonduktanzverstärker gebildet wird, also aus einem Operationsverstärker, der als spannungsgesteuerte Stromquelle arbeitet.

Der erfindungsgemäße Empfänger umfasst auch eine Energiespeichereinheit mit wenigstens einem Kondensator. Die Energiespeichereinheit wird von dem Fremdlichtstrom geladen. Der optische Empfänger ist so geschaltet, dass die in der Energiespeichereinheit geladene Energie zur Energieversorgung des optischen Empfängers verwendet wird, jedenfalls teilweise zu dessen Energieversorgung. Der erfindungsgemäße optische Empfänger erlaubt eine deutlich längere Betriebsdauer (mit einer Batterie oder mit einem Akku) als andere optische Empfänger im Stand der Technik. Dies ist insbesondere vorteilhaft, wenn der Empfänger in Fahrzeugen, z. B. als Teil einer Alarmanlage in Kraftfahrzeugen oder in Sportbooten eingesetzt wird, wenn keine Netzversorgung gegeben ist.

Der optische Empfänger kann darüber hinaus zusätzlich von anderen Spannungsquellen versorgt werden, beispielsweise von einer Batterie oder, wenn vorhanden, von einer Netzspannung, die entsprechend transformiert ist. Die in der Energiespeichereinheit geladene Energie kann aber auch für andere Bauteile oder Komponenten einer Schaltung verwendet werden, insbesondere für eine Messanordnung oder ein Messsystem, in dem der optische Empfänger integriert ist. Die Energiespeichereinheit kann beispielsweise die Funktion eines Spannungspuffers (buffering unit) übernehmen.

In einer einfachen Ausführungsform der Energiespeichereinheit kann sie eine Spannung von 0,5 Volt zur Verfügung stellen, da die Energiespeichereinheit von der vorzugsweise in Vorwärtsrichtung betriebenen Photodiode aufgeladen wird. Ihre Ausgangsspannung beträgt etwa 0,5 Volt, da dies der bevorzugte Arbeitspunkt einer Photodiode ist.

In einer bevorzugten Ausführungsform umfasst die Energiespeichereinheit einen DC-DC-Wandler. Ein DC-DC-Wandler kann beispielsweise durch eine Kombination einer Induktivität und einer Kapazität sowie durch weitere Bauelemente gebildet werden.

Bevorzugt umfasst die Energiespeichereinheit wenigstens zwei Kondensatoren und wenigstens einen Schalter, wobei die Kondensatoren derart verschaltet sind, dass sie in Reihenschaltung oder in Parallelschaltung geschaltet werden können. Die Energiespeichereinheit ist während des Ladens in Parallelschaltung geschaltet und wird zum Entladen, beispielsweise zum Umladen auf einen Energiesammelspeicher, in Parallelschaltung geschaltet. Durch diese Schaltungsanordnung kann bei der Verwendung von mehreren Kondensatoren die Spannung auch auf eine höhere Spannung, also auf ein Vielfaches der Photodiodenausgangsspannung, erhöht werden. Eine derart ausgebildete Energiespeichereinheit wird deshalb auch als Ladungspumpe bezeichnet. Sie wird in der Regel durch eine Energiespeicherregelung gesteuert. Die Energiespeicherregelung steuert und schaltet die Schalter der Energiespeichereinheit. Sie kann ein Zeitglied und/oder einen Oszillator umfassen, der von einer Referenzspannungsquelle gespeist wird. Die Energiespeicherregelung kann auf der Basis von Spannungsschwellen gesteuert werden, die mit Hilfe von Komparatoren und Referenzspannungsquellen realisiert sind. Unter einer Referenzspannungsquelle wird im Sinne der Erfindung eine Schaltung verstanden, die aus einer unstabilisierten Versorgungsspannung, beispielsweise aus der Spannung an dem Energiesammelspeicher (bzw. dessen Kondensator), eine im Wert definierte präzise Spannung erzeugt. Die Referenzspannungsquelle ist jedenfalls keine Energiequelle, die Energie liefert. Eine einfache Methode besteht darin die Versorgungsspannung (oder die von der Energiespeichereinheit zur Verfügung gestellte Spannung) über einen Vorwiderstand auf eine Z-Diode zu geben. Die Sperrspannung an der Z-Diode kann dann als Referenzspannung genutzt werden.

Das Umspeichern der in der Energiespeichereinheit gespeicherten Ladung erfolgt auf einen Energiesammelspeicher, der ein höheres Ladungsniveau zur Verfügung stellt. Der Energiesammelspeicher kann beispielsweise eine geeignet gewählte Kapazität oder ein Kondensator sein. Er kann auch einen Akkumulator (mit Laderegler) oder einen ähnlichen elektrischen Speicher umfassen, der geladen wird.

Wird die Spannung in dem Energiesammelspeicher beispielsweise einen Akkumulator auf ein höheres Spannungsniveau angehoben, kann er eine Spannungsquelle bilden, die die in dem optischen Empfänger umfassten Einheiten und Bauelemente mit Spannung versorgt. Bei einem Spannungsniveau von wenigstens 2 Volt oder von 2,5 Volt kann auch eine optoelektronische Messanordnung versorgt werden. Hierdurch gelingt es, den optischen Empfänger bzw. die Messanordnung größtenteils autark zu betreiben, jedenfalls so, dass sie wenigstens zeitweise ohne eine zusätzliche Spannungsversorgung arbeiten kann und funktioniert.

Die optoelektronische Messanordnung umfasst erfindungsgemäß neben dem optischen Empfänger mit Photodiode, Verstärkereinheit, Kopplungseinheit und Energiespeichereinheit eine Nutzsignallichtquelle und eine Kompensationslichtquelle sowie eine Fremdlichtkompensationsschaltung. Die Fremdlichtkompensationsschaltung schließt einen Taktgenerator, einen Demodulatur zur taktsynchronen Auswertung des Nutzsignalstroms, einen Modulator zur Erzeugung eines Nutzsignalsteuerstroms für die Nutzsignallichtquelle, einen Modulator zur Erzeugung eines Kompensationssignalsteuerstroms für die Kompensationslichtquelle und eine Reglereinheit zur Erzeugung wenigstens eines Ansteuersignals für wenigstens einen der Modulatoren ein. Wird von der Energiespeichereinheit oder von einem optionalen Energiesammelspeicher eine Spannung von ca. 2,5 Volt zur Verfügung gestellt, so kann diese Spannungsquelle als Betriebsspannung für den Photoempfänger und die beispielsweise als LED ausgebildeten Nutzsignallichtquelle und Kompensationslichtquelle der optoelektronischen Messanordnung dienen und zusätzlich auch für die Modulatoren der Fremdlichtkompensationsschaltung. Erfindungsgemäß ist die (oben beschriebene) optoelektronische Messanordnung derart ausgebildet, dass die Nutzsignallichtquelle und die Kompensationslichtquelle Licht zeitsequenziell getaktet und phasenweise aussenden. Die Kompensationslichtquelle ist mittels der Reglereinheit durch Steuerung des Kompensationssignalsteuerstroms in ihrer Lichtintensität in Amplitude und Phase derart regelbar, dass der zwischen unterschiedlichen Phasen auftretende taktsynchrone Wechsellicht-Nutzsignalanteil (der von der Nutzsignallichtquelle und der Kompensationssignallichtquelle herrührende WechsellichtNutzsignalanteil) zu Null wird. Eine derartige Fremdlichtkompensationsschaltung ist im Detail beispielsweise in der DE 103 00 223 B3 und EP 0 706 648 B1 beschrieben. Deren Inhalt wird durch Bezugnahme zum Inhalt dieser Anmeldung gemacht.

Die erfindungsgemäße optoelektronische Messanordnung zeichnet sich dadurch aus, dass in der Kopplungseinheit der Nutzsignalstrom von dem Fremdlichtstrom derart getrennt wird, dass der Fremdlichtstrom zum Laden einer Energiespeichereinheit zur Verfügung steht. Die Energiespeichereinheit umfasst dabei wenigstens einen Kondensator. Die in der Energiespeichereinheit geladene Energie wird wenigstens teilweise zur Energieversorgung der optoelektronischen Messanordnung verwendet.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Es zeigen:
- Figur 1: ein Prinzipschaltbild eines optischen Empfängers;
- Figur 2: eine detaillierte Schaltskizze einer Ausführungsform des optischen Empfängers gemäß Figur 1 mit einer Energiespeichereinheit;
- Figur 3: eine Detailschaltskizze der Energiespeichereinheit aus Figur 2;
- Figur 4: einen Signalverlauf der an einer Verstärkereinheit des optischen Empfängers zur Verfügung gestellten Nutzsignals, des zeitlichen Spannungsverlaufs der Energiespeichereinheit während des La- dens und des Spannungsverlauf eines Energiesammelspeichers;
- Figur 5: eine Ausschnittsvergrößerung der Signalverläufe aus Figur 4;
- Figur 6: eine Schaltskizze einer alternativen Ausführungsform eines opti- schen Empfängers; Figur 7 eine Prinzipschaltskizze einer op- toelektronischen Messanordnung, die einen optischen Empfänger umfasst;
- Figur 8: eine Prinzipschaltskizze einer alternativen Ausführungsform einer optoelektronischen Messanordnung;
- Figur 9: eine Prinzipschaltskizze einer Startschaltung einer optoelektroni- schen Messanordnung;
- Fig. 10a-c: Detailschaltskizzen der Startschaltung gemäß Figur 9.

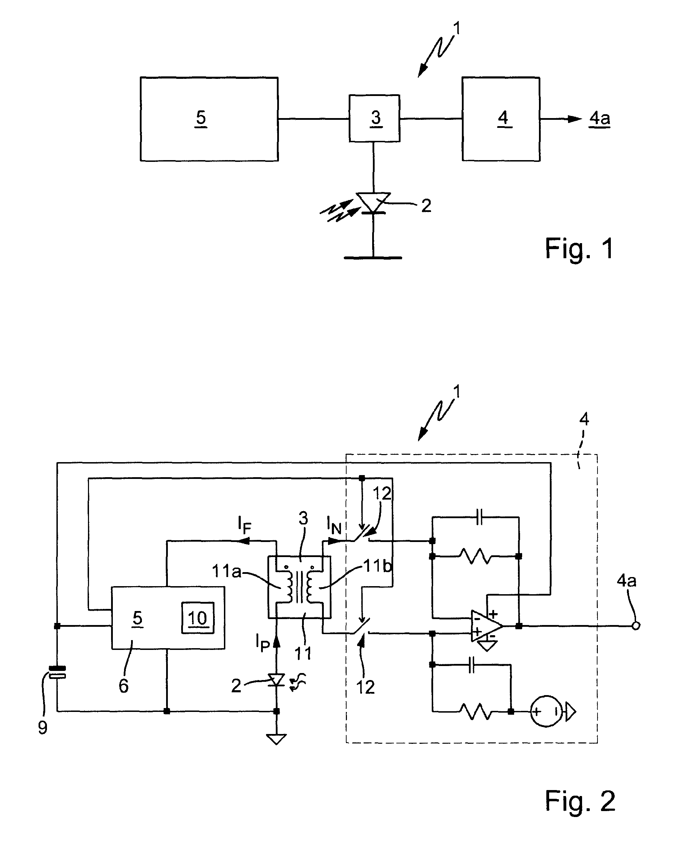

Die Figur 1 zeigt ein Prinzipbild eines optischen Verstärkers 1 mit einer Photodiode 2 zum Empfang von Licht und zu dessen Umwandlung in einen Photostrom, einer Kopplungseinheit 3, in ein Nutzsignalstrom des Photostroms von einem Fremdlichtstrom des Photostroms getrennt wird, einer Verstärkereinheit 4, in der der Nutzsignalstrom verstärkt wird oder mit einem U/I-Wandler (Transimpedanzverstärker) in eine Spannung umgewandelt wird, um für die Weiterverarbeitung einer Mess- und Auswerteeinrichtung zur Verfügung gestellt werden kann, und einer Energiespeichereinheit 5. In der Energiespeichereinheit wird der Fremdlichtstrom des Photostroms gespeichert, so dass die Energiespeichereinheit 5 geladen wird.

Figur 2 zeigt eine besondere Ausführungsform des optischen Empfängers 1 aus Figur 1. Die Energiespeichereinheit 5 ist in Form einer so genannten Ladungspumpe 6 ausgebildet und umfasst wenigstens einen Kondensator. Als Ladungspumpe 6 hat die Energiespeichereinheit 5 mehrere Kondensatoren und Schalter, die in Reihenschaltung und in Parallelschaltung geschaltet werden können. Die in Vorwärtsrichtung geschaltete Photodiode 2 lädt die Energiespeichereinheit 5 auf, wobei die an dem wenigstens einen Kondensator der Energiespeichereinheit anliegende Spannung der Ausgangsspannung der Photodiode entspricht.

Licht, das einen Wechsellicht-Nutzsignalanteil und Fremdlicht umfasst, wird von der Photodiode 2 empfangen und in einem Photostrom I_{P} umgewandelt. Der Photostrom I_{P} umfasst einen Nutzsignalstrom I_{N} und einen Fremdlichtstrom I_{F}. Der Fremdlichtstrom I_{F} ist in der Regel niederfrequent bzw. ein Gleichstrom. Der Photostrom I_{P} fließt von der Photodiode über die Kopplungseinheit 3, in der der Nutzsignalstrom I_{N} von dem Fremdlichtstrom I_{F} getrennt wird. Der Fremdlichtstrom I_{F} fließt zur Energiespeichereinheit 5 und lädt diese auf. Der Nutzsignalstrom I_{N} wird von der Kopplungseinheit 3 übertragen und fließt in die Verstärkereinheit 4, in der er verstärkt wird und an deren Ausgang 4a er für eine Weiterverarbeitung zur Verfügung steht.

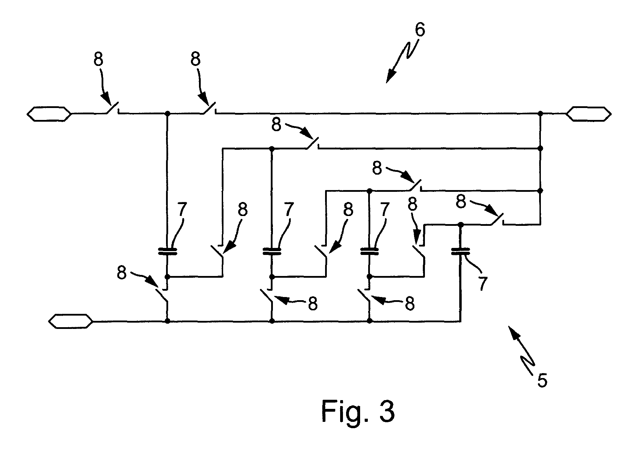

Bevorzugt ist die Energiespeichereinheit 5 als Ladungspumpe 6 ausgebildet und umfasst mehrere Kondensatoren 7 und mehrere Schalter 8. Figur 3 zeigt eine Ausführungsform der Energiespeichereinheit 5, in der vier Kondensatoren 7 vorhanden sind. Die Kondensatoren 7 können parallel geschaltet werden, so dass in den Kondensatoren 7 die Photodiodenausgangsspannung von etwa 0,5 Volt anliegt. Durch Reihenschaltung der Kondensatoren kann die Spannung in einem Energiesammelspeicher 9 auf ein Vielfaches der Photodiodenausgangsspannung erhöht werden. Im vorliegenden Beispiel mit vier Kondensatoren 7 wird die Spannung vervierfacht, so dass in dem Energiesammelspeicher 9 eine Spannung von ca. 2 Volt vorherrscht. Dies wird durch einen periodisch wiederholten Vorgang erzielt.

Die in der Energiespeichereinheit 5 verwendeten Schalter 8 sind bevorzugt derart ausgebildet, dass die Schalter bereits bei einer Spannung von 0,4 Volt, bevorzugt bei einer Spannung von 0,3 Volt arbeiten, also schaltbar sind. Besonders bevorzugt lassen sich die Schalter 8 schon bei einer Spannung von 0,2 Volt schalten. Dies gilt insbesondere dann, wenn die Schalter 8 als integrierte Schalter 8 ausgebildet sind, also als integrierte Schaltungen bzw. integrierte Schaltbauteile realisiert sind. Die Schwellenspannung der integrierten Schalter 8 muss also unter 0,4 Volt, bevorzugt unter 0,3 Volt und besonderes bevorzugt bei 0,25 Volt liegen. Die Schalter 8 sind ab der Schwellenspannung funktionsfähig. Damit lässt sich der optische Empfänger 1 auch ohne eine Hilfsspannung von außen starten.

Wird die Energiespeichereinheit 5 in CMOS-Technologie realisiert, ist der maßgebliche Parameter die Schwellenspannung der NMOS- und PMOS-Transistoren, die zu diesem Zweck nicht größer als 0,25 Volt sein sollte. Dann lässt sich der optische Sensor 1 auch ohne eine externe Hilfsspannung beispielsweise aus einer Batterie oder aus dem Netz, betreiben. Steht eine externe Spannungsversorgung zur Verfügung, können auch elektronische Schalter 8 und Steuerelemente verwendet werden, die eine höhere Schwellenspannung aufweisen.

Zur Steuerung der Energiespeichereinheit 5 ist eine Energiespeicherregelung 10 vorgesehen. Die Energiespeicherregelung 10 kann ein Zeitglied umfassen, beispielsweise einen Timer 7 oder Oszillator, um ein getaktetes vorherbestimmtes Schalten der in der Energiespeichereinheit 5 vorhandenen Schalter 8 zu bewirken. Bevorzugt ist die Energiespeicherregelung 10 in der Energiespeichereinheit 5 integriert. Die Steuerung kann auch auf einer Überwachung der Spannung an den Kondensatoren der Energiezwischenspeicher basieren, wobei Komparatoren und Referenzspannungsquellen zum Einsatz kommen. Beide Verfahren (Zeitglied-basierte Steuerung und Spannungspegel-basierte Steuerung) können auch miteinander kombiniert werden.

Die Kopplungseinheit 3 des optischen Empfängers 1 gemäß Figur 2 ist ein Übertrager 11, also ein Transformator für die Signalübertragung von analogen und/oder digitalen Signalen. Auskopplung bzw. das Trennen des in dem Photostrom umfassten Nutzsignalanteils von dem Fremdlichtanteil kann nicht nur mittels eines Übertragers 11 sondern generell auch mit einem Gyrator erfolgen, der in der Kopplungseinheit 3 umfasst ist.

Bei der Verwendung eines Übertragers 11 wird über dessen Primärseite 11a der Spule des Übertragers 11 der bzw. die Kondensatoren der Energiespeichereinheit 5 bzw. der Ladungspumpe 6 aufgeladen. Die Primärseite der Spule des Übertragers 11 ist gegenüber Gleichstromsignalen niederohmig. Daher kann der vom Fremdlicht herrührende Fremdlichtstromanteil ungehindert zur Energiespeichereinheit 5 fließen. Gegenüber dem höherfrequenten Nutzsignalanteil des Photostroms, der in der Regel bei einigen Kilohertz, vorzugsweise bei einigen Megahertz liegt, ist die Spule des Übertragers 11 jedoch hochohmig, so dass am Ausgang des Übertragers 11 (Ausgang des Transformators) ein Wechselsignal auftritt, dass in dem in der Sekundärseite 11 b des Übertragers vorhandenen Verstärkereinheit 4 eingespeist und dort verstärkt wird.

In der Ausführungsform gemäß Figur 2 umfasst die Verstärkereinheit 4 Schalter 12, die die Photodiode 2 von der Verstärkereinheit 4 wenigstens zeitweise trennen. Die Photodiode 2 und die Verstärkereinheit 4 sind vorzugsweise genau dann getrennt, wenn die Umladung der gespeicherten Energie von der Energiespeichereinheit 5 auf den Energiesammelspeicher 9 stattfindet.

Eine derartige Ausführungsform der Verstärkereinheit 4 ist vorteilhaft, da die Auswertung des Nutzsignalstroms I_{N} an der Verstärkereinheit 4 unterbrochen sein muss, wenn die Umladung erfolgt. Anderenfalls würde das Nutzsignal durch den Schaltimpuls überlagert und die Messung, beispielsweise zum Erkennen eines Gegenstands, verfälscht. Durch Öffnen der Schalter 12 an der Sekundärseite 11b der Spulen des Übertragers 11, wird die beispielsweise als Transimpedanzverstärker ausgebildete Verstärkereinheit 4 abgetrennt.

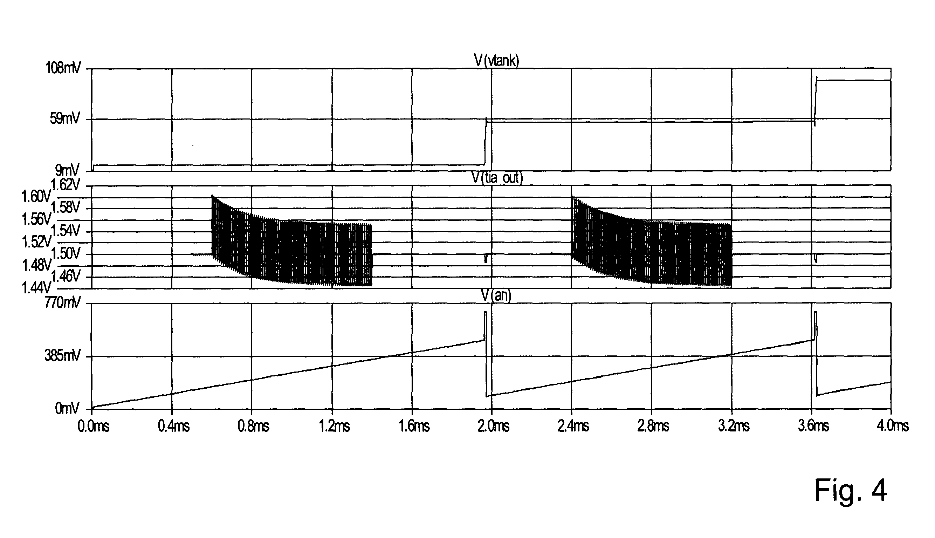

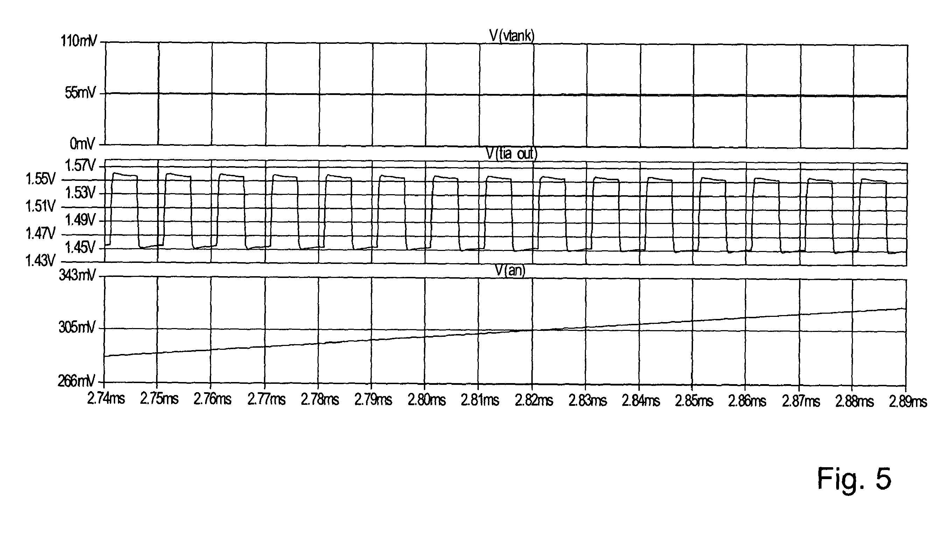

Die zeitlichen Verläufe der Signalspannung in den Figuren 4 und 5 zeigen das Zusammenspiel zwischen Energiegewinnung und Messvorgang. Während die Kondensatoren 7 der Energiespeichereinheit 5 aufgeladen werden, steigt die Spannung an dem in Figur 2 mit AN bezeichneten Knoten linear an. Der Spannungsverlauf ist in dem unteren Diagramm der Figuren 4 und 5 gezeigt. Während die Kondensatoren aufgeladen werden, kann eine Messung vorgenommen werden. Der Nutzsignalstrom I_{N} wird über den Übertrager 11 ausgekoppelt und erscheint am Ausgang 4a der Verstärkereinheit 4. Dabei wird die Messung des Nutzsignalstroms I_{N} während des Entladens der Energiespeichereinheit 5 und des Umladens auf den Energiesammelspeicher 9 unterbrochen. Sobald die Spannung der Photodiode 5 (am Knoten 13) auf ca. 0,5 Volt angestiegen ist, erfolgt eine Umladung auf den Energiesammelspeicher 9. Im oberen Diagramm erkennt man den Verlauf der Spannung über dem Energiesammelspeicher 9. Die Kondensatoren 7 der Energiespeichereinheit 5 werden entladen und, der Ladevorgang startet von neuem, sobald die Schalter 8 der Energiespeichereinheit 5 wieder so geschaltet sind, dass sie parallel zur Photodiode 2 liegen.

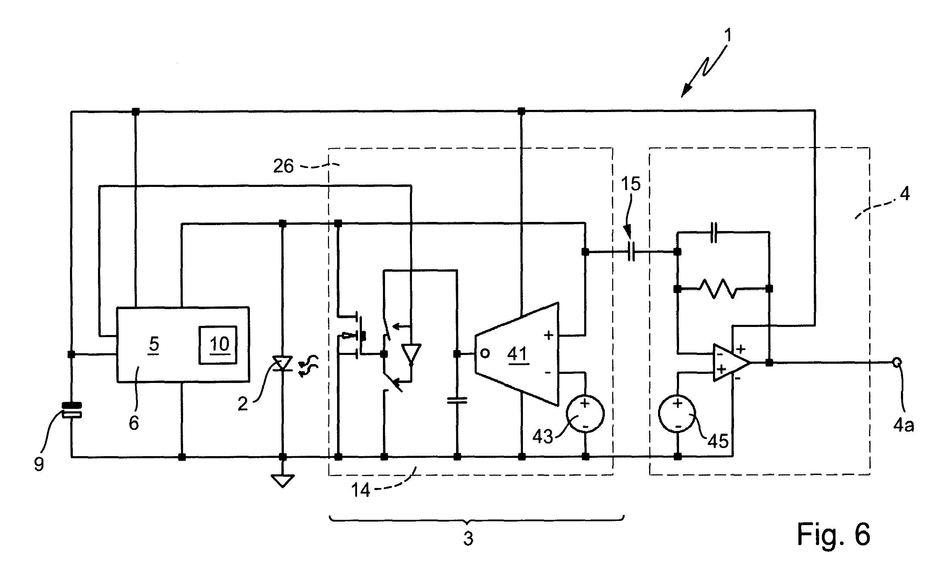

In Figur 6 ist eine Schaltungsvariante eines optischen Empfängers 1 angezeigt, bei dem die Kopplungseinheit 3 durch eine Gyratorschaltung 14 mit einem Gyrator 41 realisiert ist. Die Kopplungseinheit 3 umfasst neben der Gyratorschaltung 14 auch einen Auskopplungskondensator 15, zu dem die Kondensatoren 7 der Energiespeichereinheit 5 (und die Photodiode 2) während des Ladevorgangs parallel geschaltet sind. Damit die Effizienz der Energiegewinnung möglichst hoch ist, muss der Auskopplungskondensator 15 für den Nutzsignalstrom I_{N} klein sein im Vergleich zu den Kondensatoren 7 der Energiespeichereinheit 5. Dadurch wird jedoch der Nutzsignalstrom I_{N} verringert, also das Nutzsignal abgeschwächt, da sich die Spannung auf die Kondensatoren entsprechend des Kondensatorverhältnisses aufteilt.

Daher kann mit der in Figur 6 gezeigten Schaltung das Nutzsignal nur ausgelesen werden, wenn die Kondensatoren 7 der Energiespeichereinheit 5 von der Photodiode 2 abgekoppelt sind. Für diesen Fall übernimmt die Gyratorschaltung 14, die einen Transkonduktanzverstärker 41 und einen NMOS-Transistor einschließt, die Arbeitspunktstabilisierung der Photodiode. Die Gyratorschaltung 14 arbeitet also als Photodiodenspannungsbegrenzer und ist somit als Photodiodenbegrenzerschaltung 26 ausgebildet. So wird sichergestellt, dass die Vorwärtsspannung der Diode auf ca. 0,5 Volt begrenzt und stabilisiert ist. Um Strom zu sparen, sind die Pausen zwischen den Messungen, also den Abtastungen des Nutzsignals, in der Regel mindestens zehnmal größer als die eigentliche Messzeit. Daher ist diese Einschränkung auf einen sequentiellen Betrieb nicht gravierend. Jedoch sinkt hierdurch der Wirkungsgrad der Empfängerschaltung um bis zu 20 %.

Die in den Figuren gezeigten Ausführungsformen des optischen Empfängers 1 eignen sich besonders zur Speicherung und letztlich zur Spannungsversorgung des optischen Empfängers 1, bei dem die Energie aus dem mit der Photodiode empfangenen Umgebungslicht gespeichert und beispielsweise an einen als Akkumulator ausgebildeten Energiesammelspeicher 9 "zurückgespeist" werden kann. Bei ausreichender Beleuchtung der Photodiode 2 ist somit auch ein autarker Betrieb des optischen Empfängers 1 möglich. Der optische Empfänger 1 eignet sich deshalb besonders gut zum Einsatz in Anwendungen, bei denen der Empfänger oder optischer Sensor, in den der optische Empfänger 1 integriert ist, keinen Netzzugang haben und der Stromverbrauch deshalb besonders klein sein muss. Denkbar ist beispielsweise, dass ein derartiger Sensor nachts mit einem Akku oder mit einem "Supercap-Kondensator" gestützt wird. Durch die Wiederaufladung tagsüber, wenn die Umgebungslichtstärke groß genug ist, kann der Energiepuffer wieder aufgeladen werden. Dadurch können die Wartungszeiten eines solchen Sensors deutlich vergrößert werden.

Vorteilhaft ist dabei, dass sich der optische Empfänger 1 in seiner Herstellung kaum verteuert, da er die für die Energiespeicherung benötigte Photodiode in dem optischen Empfänger zum Empfang des Nutzsignals bereits vorhanden ist. Insbesondere in optischen Messanordnungen, die auch bei starkem Umgebungslicht eingesetzt werden können und fehlerfrei arbeiten, ist ein derartiger optischer Empfänger sehr vorteilhaft. Genau diese Eigenschaft (starkes Umgebungslicht) ist wichtig, damit die Energiegewinnung in dem optischen Empfänger 1 sinnvoll eingesetzt werden kann.

Darüber hinaus ist es denkbar, die effektive Fläche der Photodiode zu vergrößern, beispielsweise durch Linsen. Auf diese Art kann der Photostrom maximiert werden, ohne das die Kosten eines derartigen optischen Empfängers oder optischen Sensors merklich steigen, da die Reflektoren und optischen Konzentratoren aus Plastikmaterial hergestellt sein können und somit deutlich preiswerter sind, als beispielsweise die Vergrößerung der Photodiode und deren Siliziumfläche.

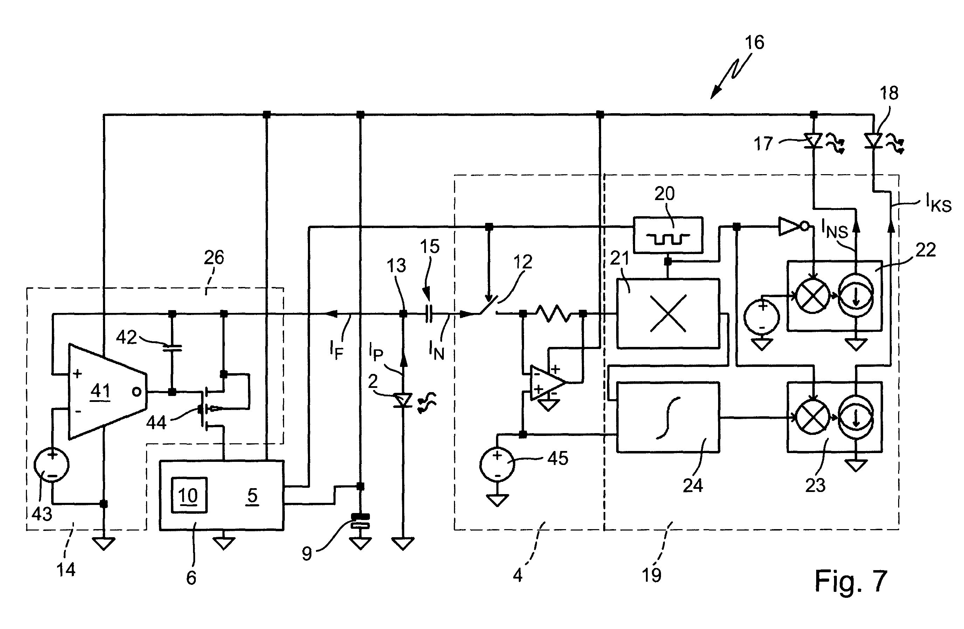

Figur 7 zeigt eine Ausführungsform eines optischen Empfängers 1, der in eine optoelektronische Messanordnung 16 integriert ist. Die optoelektronische Messanordnung 16 umfasst neben dem optischen Empfänger 1 eine Nutzsignallichtquelle 17, eine Kompensationslichtquelle 18 und eine Fremdlichtkompensationsschaltung 19. Die Fremdlichtkompensationsschaltung 19 schließt einen Taktgenerator 20 einen Demodulator 21 zur taktsynchronen Auswertung des Nutzsignalstroms In, einen Modulator 22 zur Erzeugung eines Nutzsignalsteuerstroms I_{Ns} für die Nutzsignallichtquelle 17, einen Modulator 23 zur Erzeugung eines Kompensationssignalsteuerstroms I_{Ks} für die Kompensationslichtquelle 18 und eine Reglereinheit 24 zur Erzeugung wenigstens eines Ansteuersignals für wenigstens einen der Modulatoren 22, 23 ein.

Die Nutzsignallichtquelle 17 und/oder die Kompensationslichtquelle 18 sind bevorzugt als LED ausgebildet. Beide Lichtquelle werden derart angesteuert, dass sie zeitsequentiell getaktet, phasenweise Licht aussenden. Dabei sind die Phasen des Nutzsignalsteuerstroms I_{Ns} und des Kompensationssignalsteuerstroms I_{Ks} um 180° phasenverschoben. Die beiden Steuerströme weisen also ein unterschiedliches Vorzeichen auf.

In der Ausführungsform gemäß Figur 7 wird der Modulator 23 von der Reglereinheit 24 derart angesteuert, dass der Kompensationssignalsteuerstrom I_{Ks} derart verändert wird, dass die von der Kompensationslichtquelle 18 abgestrahlte Lichtintensität und/oder Phase regelbar ist. Die Kompensationslichtquelle 18 wird dabei derart geregelt, dass der zwischen unterschiedlichen Phasen auftretende taktsynchrone Wechsellicht-Nutzsignalstrom, der von der Photodiode 2 über die Kopplungseinheit 3 in die Fremdlichtkompensationsschaltung 19 fließt, zu Null wird. Die genaue Funktionsweise der Fremdlichtkompensationsschaltung wird in der DE 103 00 223 B3 beschrieben.

Die optoelektronische Messanordnung 16 umfasst eine Energiespeicherregelung 10 und eine als Gyratorschaltung 14 ausgebildete Photodiodenbegrenzerschaltung 26. Bevorzugt besteht die Photodiodenbegrenzerschaltung 26 aus einer geregelten Last, die soviel Strom entnimmt, dass die Vorwärtsspannung der Diode 2 bei 0,5 Volt konstant gehalten wird. Die Gyratorschaltung 14 umfasst einen Transkonduktanzverstärker 41, eine Filterkapazität 42, eine Referenzquelle 43 und einen Feldeffekttransistor 44. Sie weist also eine Tiefpasscharakteristik auf. Hierdurch wird sicher gestellt, dass der aus dem zeitlich konstanten Umgebungslicht stammende Fremdlichtstrom I_{F} der Energiespeichereinheit 5 zugeführt wird, nicht aber der hochfrequente Stromanteil (Nutzsignalstrom I_{N}) der über die Nutzsignallichtquelle 17 und die Kompensationslichtquelle 18 in Form eines Wechselnutzsignals ausgesendet wurde. Der Nutzsignalstrom des Photostroms I_{P} wird über den Auskopplungskondensator 15 ausgekoppelt und der Verstärkereinheit 4 und der Fremdlichtkompensationsschaltung 19 zugeführt.

Für die Auskopplung des Nutzsignals (Informationsauskopplung) ist es erforderlich, dass die Photodiode 2 mit einem möglichst hohen Innenwiderstand betrieben wird. Die Photodiode 2 darf deshalb in Vorwärtsrichtung nicht voll durchschalten, da in diesem Fall der Innenwiderstand sehr klein würde und der Nutzsignalstrom nicht mehr kapazitiv ausgekoppelt werden kann. Die Gyratorschaltung 14 dient also als Photodiodenspannungsbegrenzer und stellt den Arbeitspunkt der Photodiode 2 0,2 Volt bis 0,6 Volt, bevorzugt auf 0,5 Volt Vorwärtsspannung ein. Hierdurch ist der Innenwiderstand hoch genug für eine Nutzsignalstromauskopplung. Gleichzeitig wirkt die Photodiode 2 wie gewünscht als Quelle für die Energiespeisung.

In der optoelektronischen Messanordnung 16 wird der (niederfrequente) Fremdlichtstrom I_{F} über die Gyratorschaltung 14 derart ausgekoppelt, dass er der Energiespeichereinheit 5 und dem mindestens einen Kondensator 8 der Energiespeichereinheit zugeführt und dort zwischengespeichert wird. Die als Ladungspumpe 6 ausgebildete Energiespeichereinheit 5 kann das Spannungsniveau der Photodiode 2 vervielfachen. Beispielsweise kann die Spannung auf 2,5 Volt angehoben werden. Hierdurch ist es möglich, die Betriebsspannung für die optoelektronische Messanordnung, einschließlich der Nutzsignallichtquelle 17 und der Kompensationslichtquelle 18 zur Verfügung zu stellen. Die als LED ausgebildeten Lichtquellen benötigen beispielsweise eine Betriebsspannung von ca. 2 Volt da in der Regel die Dioden-Vorwärtsspannung der LEDs zwischen 1,2 und 1,8 Volt liegt.

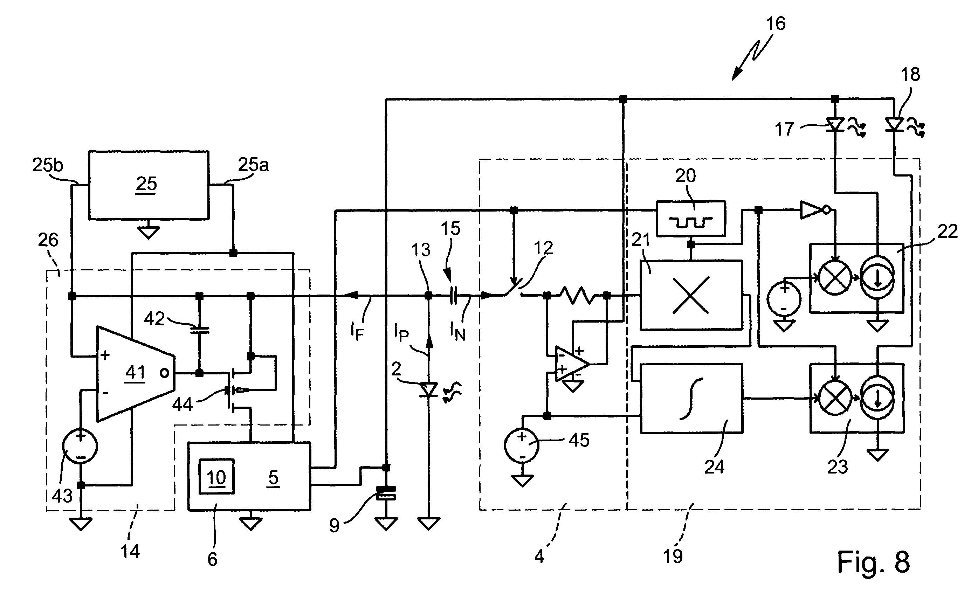

Abhängig von der verwendeten Technologie, in der die optoelektronische Messanordnung 16 bzw. ein optischer Sensor realisiert sind (IC-Technologie) ist es teilweise schwierig oder nicht möglich, die Energiespeichereinheit 5 und die Gyratorschaltung 14 (Photodiodenbegrenzerschaltung 26) ohne externe Spannungsquelle oder Hilfsspannungsquelle zu betreiben und nur mit der von der Photodiode 2 zur Verfügung gestellten Spannung von ca. 0,5 bis 0,7 Volt zu starten. Will man auf eine Zusatzspannungsquelle (externe Spannungsquelle, Hilfsspannungsquelle wie z. B. Batterie oder Akku) verzichten, kann eine Ausführungsform verwendet werden, wie sie in Figur 8 gezeigt ist. Gegenüber der Ausführungsform gemäß Figur 7 weist die optoelektronische Messanordnung 16 gemäß Figur 8 eine zusätzliche Startschaltung 25 auf, die beispielsweise ähnlich wie die Ladungspumpe 6 aus einer Mehrzahl von Kondensatoren aufgebaut sein kann. In der Schaltungsanordnung gemäß Figur 8 wird die Kopplungseinheit 3 aus der Gyratorschaltung 14 und dem Auskopplungskondensator 15 gebildet. Die Eingangskapazität C_{IN} der Energiespeichereinheit 5 ist über den Feldeffekttransistor 44 mit dem Auskopplungskondensator 15 verbunden. Gleichzeitig wird die Eingangskapazität C_{IN} und der Auskopplungskondensator 15 durch den Feldeffekttransistor getrennt. Hierbei ist der Gyrator 41 in PMOS-Transistortechnologie realisiert. Durch diese Schaltungsanordnung ist es möglich, die Energiespeichereinheit 5 gleichzeitig zur Messung des Nutzsignalstroms I_{N} zu betreiben, also gleichzeitig Energie zu speichern (die Kondensatoren der Energiespeichereinheit 5 werden geladen) und eine Informationsübertragung durchzuführen. Aus diesem Grund ist diese Schaltungsanordnung besonders effizient.

Die Startschaltung 25 ist in der Regel derart ausgebildet, dass sie schon bei besonders niedrigen Betriebsspannungen arbeitet. Sie kann dazu eingesetzt werden, die Photodioden-Spannung von ca. 0,5 Volt auf ein höheres Spannungsniveau zu transformieren, damit der Gyrator (Gyratorschaltung 14) zusammen mit der Energiespeichereinheit 5 mit einer ausreichend hohen Betriebsspannung versorgt werden kann. Die Startschaltung 25 hat dabei eine geringere Energieeffizienz als die Ladungspumpe 6 bzw. die Energiespeichereinheit 5.

Die optoelektronische Messanordnung 16 kann in diesem Fall ohne eine separate Spannungsquelle betrieben werden. Damit ist die Messanordnung 16 autark und kann insbesondere in mobilen Geräten oder Fahrzeugen verwendet werden. Da keine weiteren Batterien oder andere Spannungsversorgungen eingesetzt werden müssen, reduziert sich auch der Wartungsbedarf einer derartigen Speicheranordnung. Wichtig ist dabei, dass die in Figur 8 eingezeichneten Referenzspannungsquellen 43, 45 ersetzt werden können. Diese Spannungsquellen werden durch die Energiespeichereinheit 5 bzw. den Energiesammelspeicher 9 zur Verfügung gestellt. Sie sind in den Figuren also nur als schematische Erläuterung der Funktion zu sehen und so nicht in der Schaltungsanordnung realisiert.

Damit der optische Empfänger 1 und die optoelektronische Messanordnung 16 autark arbeiten können, muss die von der Photodiode 2 zur Verfügung gestellte Spannung entsprechend erhöht werden, damit beispielsweise die Gyratorschaltung 14 oder eine ähnliche Spannungswandlerschaltung mit einem ausreichend hohen Spannungsniveau versorgt werden kann. Eine dazu eingesetzte Startschaltung 25 muss dazu entsprechend ausgelegt sein.

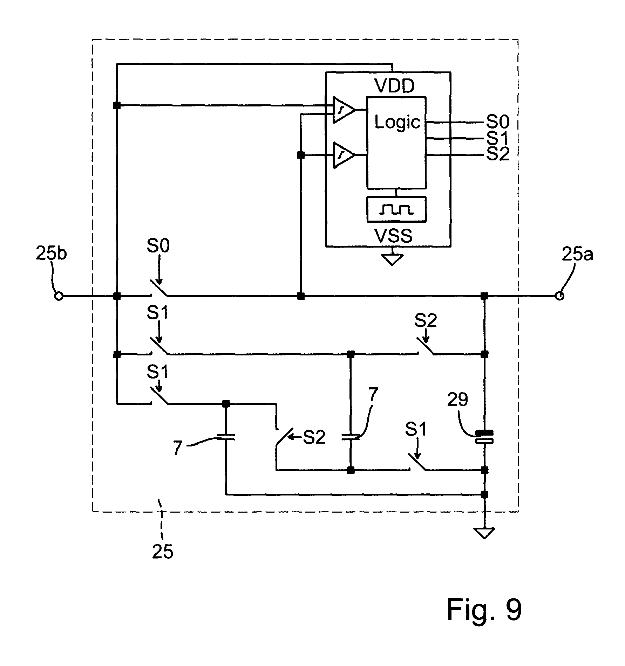

Figur 9 zeigt ein Prinzipbild einer ersten Ausführungsform einer Startschaltung 25, wie sie in der Schaltungsanordnung in Figur 8 eingesetzt ist. Zu Beginn des Ladevorgangs sind die Schalter S0 und S1 zunächst geschlossen, um einen optionalen Zwischenspeicher 29 oder den Energiesammelspeicher 9 sowie die beiden Kondensatoren 7 der Energiespeichereinheit 5 auf die Photodiodenspannung aufzuladen, die in der Regel zwischen 0,5 Volt und 0,7 Volt liegt. Sobald die Kondensatoren 7 der Energiespeichereinheit 5 oder der Energiesammelspeicher 9 bzw. der Zwischenspeicher 29 entsprechend aufgeladen sind, werden die Schalter S0 und S1 geöffnet. Indem nun ein Schalter S2 geschlossen wird, erfolgt eine Umladung der beiden Kondensatoren 7 auf den Energiesammelspeicher 9. Durch nachfolgendes abwechselndes Schalten der Schalter S1 und S2 bei gleichzeitig geöffnetem Schalter S0 wird eine schrittweise Erhöhung der Spannung des Energiesammelspeichers 9 vorgenommen. Dieser Vorgang kann beispielsweise so lange erfolgen, bis die Spannung im Energiesammelspeicher 9 wenigstens dem Doppelten der Photodiodenspannung der Photodiode 2 entspricht. Die Schalter S0, S1 und/oder S2 können in CMOS-Technologie realisiert sein.

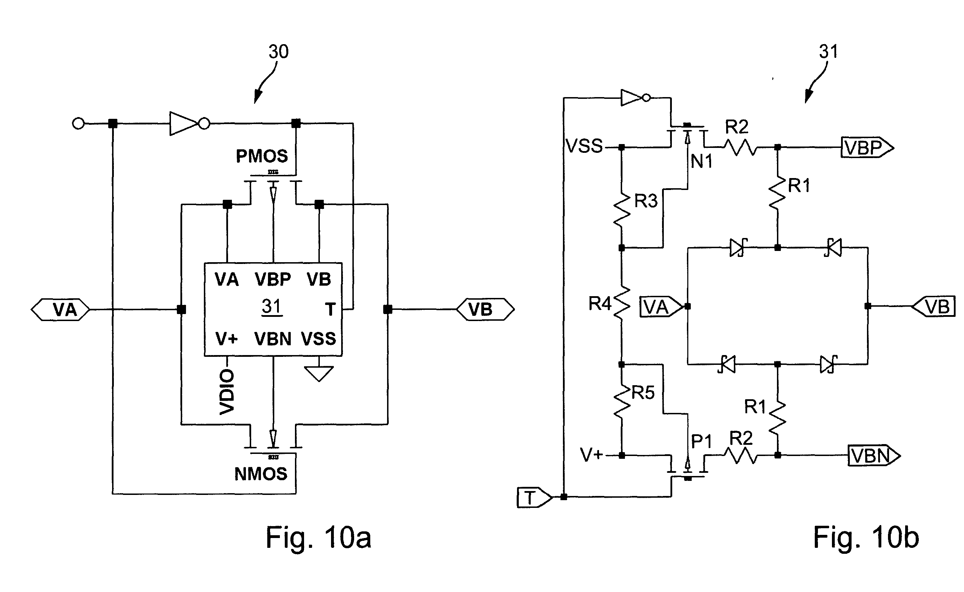

Figur 10a zeigt eine Ausführungsform einer Schaltungsanordnung 30 der Schalter S0, S1 und S2 zur Steuerung der Startschaltung 25 gemäß Figur 9. Die Schaltungsanordnung 30 hat einen Eingang 30a, eine Ausgang 30b und einen Schalteingang 30c, an dem die entsprechenden Schaltsignale anliegen. Mit dieser Schaltung wird der Einschaltwiderstand der als CMOS-Analogschalter ausgebildeten Schalter S0, S1, S2 verringert. Diese Anordnung löst das Problem, dass CMOS-Transistoren als Schalter eine sichere Schalt-Funktion in der Regel nur bei einer Schaltspannung gewährleisten, die höher als ihre Schwellenspannung ist. Bei der niedrigen Photodiodenspannung ist ein zuverlässiges Schalten nur dann gewährleistet, wenn der Einschaltwiderstand des Schalters verringert werden kann.

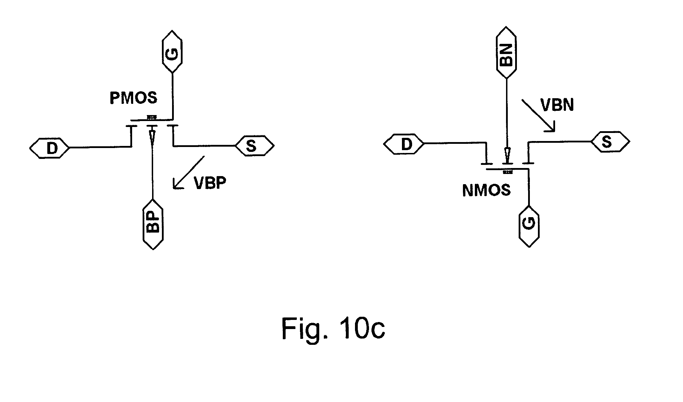

Im Allgemeinen erfolgt der Schaltvorgang eines CMOS-Analogschalters über die Gate-Spannungen der PMOS- und NMOS-Transistoren. Der Substratanschluss BN, BP liegt gegenüber dem Source-Anschluss S auf gleichem Potential oder ist negativer, so dass die Substratdiode in Sperrrichtung betrieben wird. Figur 10c zeigt die hierbei verwendete Zählrichtung der Substratspannung VBP bei PMOS-Transistoren und VBN bei NMOS-Transistoren. Die Substratdioden werden also mit einer zeitlich konstanten Sperrspannung betrieben und haben folglich maximal die Spannung 0 Volt.

Wenn die Schaltungsanordnung so eingestellt ist, dass die Substratspannung VBN, VBP auf einen positiven Wert geregelt bzw. gesetzt wird, der ca. 0,2 Volt kleiner als die Vorwärtsspannung der Substratdioden ist, verringert sich die Schwellenspannung der Transistoren. Der Einschaltwiderstand wird bei gegebener Gate-Spannung minimiert. Es ist wünschenswert, die Substratspannung auf einen Wert von gleich oder kleiner als 0 Volt zu legen bzw. zu regeln, damit die Transistoren auch im ausgeschalteten Zustand möglichst hochohmig sind. Hierdurch erhöht sich die Schwellenspannung der Transistoren und die Transistoren werden sicher ausgeschaltet. Durch das Umschalten der Substratspannung VBN bzw. VBP von einer möglichst negativen Spannung im ausgeschalteten Zustand auf eine positive Spannung kleiner als die Flußspannung der Substratdioden im eingeschalteten Zustand wird ein zuverlässiges und exaktes Einschalten und Ausschalten der Transistoren gewährleistet.

Der Figur 10a ist zu entnehmen, dass die Substratanschlüsse der Transistoren von einer Einheit gesteuert werden, die synchron zu einem Einschaltsignal (an dem Schalteingang 30c anliegend) die Substratspannungen VBP des PMOS-Transistors und VBN des NMOS-Transistors im Einzelfall auf einen positiven Wert, beispielsweise von ca. 0,4 Volt setzen. Im ausgeschalteten Zustand wird die Spannung auf 0 Volt, vorzugsweise auf einen möglichst negativen Wert, also kleiner 0 Volt gesetzt.

In Figur 10b wird eine Schaltungsanordnung 31 gezeigt, mit der die Substratspannungssteuerung, die für die Steuerung der Startschaltung 25 erforderlich ist, realisiert werden kann. Mit Hilfe von Schottky-Dioden wird die "positivste" und "negativste" Spannung an den beiden Anschlüssen des Analogschalters extrahiert. Über die beiden Feldeffekt-Transistoren P1 und N1 erfolgt eine entsprechende Umschaltung. Die hierbei erzeugte Ausgangsspannung VBP ist die Substratspannung für den PMOS-Transistor. Die Spannung VBN ist die Substratspannung für den NMOS-Transistor.

Es kann vorteilhaft sein, anstelle der beiden Transistoren N1 und P1 auch gesteuerte Stromquellen einzusetzen. Dem Fachmann ist klar, dass ähnliche Ausführungen und Schaltungsanordnungen ebenfalls zu dem gleichen Ziel führen. Wesentlich ist nur, dass ein zuverlässiger Schalter entsteht, der auch bei geringen Spannung von unter 0,7 Volt, vorzugsweise von kleiner gleich 0,5 Volt zuverlässig arbeitet, damit mit der vorhandenen Photodiodenspannung der Photodiode 2 ein Energiespeicher geladen werden kann, mittels dem die Steuerung der Energiespeichereinheit 5 des optischen Empfängers zuverlässig funktioniert.

## Patentansprüche

1. Optischer Empfänger zum Empfang von Wechsellicht-Nutzsignalen und zur Speicherung elektrischer, aus Fremdlicht gewonnener Energie umfassend
- eine Photodiode (2) zum Empfang von Licht, das Fremdlicht und einen im Vergleich zum Fremdlicht höherfrequenten Wechsellicht-Nutzsignalanteil aufweist, und zur Umwandlung des Lichts in einen Photostrom (I_{P}), der einen Nutzsignalstrom (I_{N}) und einen Fremdlichtstrom (I_{F}) umfasst,
- eine Kopplungseinheit (3) zum Entkoppeln und Trennen des Nutzsignalstroms (I_{N}), der von dem optischen Wechsellicht-Nutzsignalanteil erzeugt wurde, von dem Fremdlichtstrom (I_{F}), der von dem Fremdlicht erzeugt wurde,
- eine Verstärkereinheit (4) zum Verstärken des Nutzsignalstroms (I_{N}) und
- eine Energiespeichereinheit (5), die wenigstens einen Kondensator (7) einschließt und die durch den Fremdlichtstrom (I_{F})geladen wird,
wobei die in der Energiespeichereinheit (5) geladene Energie zur wenigstens teilweisen Energieversorgung des optischen Empfängers (1) und/oder zur wenigstens teilweisen Energieversorgung einer den optischen Empfänger (1) umfassenden Messanordnung (16) verwendet wird.

2. Optischer Empfänger nach Anspruch 1, **dadurch gekennzeichnet, dass** die Energiespeichereinheit (5) wenigstens zwei Kondensatoren (7) und Schalter (8) einschließt, so dass die Kondensatoren (7) in Reihenschaltung oder in Parallelschaltung geschaltet werden können.

3. Optischer Empfänger nach Anspruch 2, **dadurch gekennzeichnet, dass** die Kondensatoren (7) in Reihenschaltung geschaltet sind, um die Energie der aufgeladenen Energiespeichereinheit (5) auf einen Energiesammelspeicher (9) mit höherem Spannungsniveau umzuladen.

4. Optischer Empfänger nach Anspruch 3, **gekennzeichnet durch** einen Schalter, der die Photodiode (2) von der Verstärkereinheit (4) wenigstens zeitweise derart trennt, dass die Photodiode (2) von der Verstärkereinheit (4) getrennt ist wenn eine Umladung von der Energiespeichereinheit (5) auf einen Energiesammelspeicher (9) stattfindet.

5. Optischer Empfänger nach einem der vorhergehenden Ansprüche, **gekennzeichnet durch** eine Energiespeicherregelung (10) zur Steuerung der Energiespeichereinheit (5).

6. Optischer Empfänger nach Anspruch 5, **dadurch gekennzeichnet, dass** die Energiespeichereinheit (5) über einen Gyrator (41) von der Photodiode (2) entkoppelbar ist.

7. Optischer Empfänger nach Anspruch 1, **dadurch gekennzeichnet, dass** die Energiespeichereinheit (5) einen DC-DC-Wandler umfasst.

8. Optischer Empfänger nach einem der vorhergehenden Ansprüche, **dadurch gekennzeichnet, dass** die Kopplungseinheit (3) ein Übertrager (11) ist oder einen Gyrator (41) umfasst.

9. Optischer Empfänger nach einem der vorhergehenden Ansprüche, **dadurch gekennzeichnet, dass** die Verstärkereinheit (4) einen Bandpass-Filter oder einen Hochpass-Filter umfasst und/oder die Verstärkereinheit (4) als Stromverstärker ausgelegt ist oder als Strom-Spannungswandler arbeitet.

10. Optischer Empfänger nach einem der vorhergehenden Ansprüche, **dadurch gekennzeichnet, dass** die Photodiode (2) in Vorwärtsrichtung geschaltet ist, wobei vorzugsweise eine Photodiodenbegrenzerschaltung (26) eine Vorwärtsspannung der Photodiode (2) auf unter 0,7 Volt regelt, bevorzugt die Vorwärtsspannung in einem Bereich zwischen 0,2 und 0,6 Volt, besonders bevorzugt auf 0,5 Volt regelt.

11. Optischer Empfänger nach Anspruch 2, **dadurch gekennzeichnet, dass** die in der Energiespeichereinheit (5) verwendeten Schalter (8) derart ausgebildet sind, dass die Schalter (8) bereits ab einer Spannung von 0,4 Volt, bevorzugt ab einer Spannung von 0,3 Volt, besonders bevorzugt ab einer Spannung von 0,2 Volt schaltbar sind, insbesondere, wenn die Schalter integrierte Schalter (8) sind, dass deren Schwellenspannung unter 0,4 Volt, bevorzugt unter 0,3 Volt, besonders bevorzugt bei 0,25 Volt liegt.

12. Optoelektronische Messanordnung umfassend
- eine Nutzsignallichtquelle (17) und eine Kompensationslichtquelle (18), die Licht zeitsequentiell getaktet, phasenweise aussenden,
- einen optischen Empfänger (1), insbesondere einen optischen Empfänger (1) nach einem der vorhergehenden Ansprüche, mit einer Photodiode (2) zum Empfangen von Licht, das einen von den Lichtquellen (17, 18) ausgesandten taktsynchronen WechsellichtNutzsignalanteil und einen Fremdlichtanteil umfasst, und mit einer Verstärkereinheit (4) zum Verstärken eines auf dem empfangenen Wechsellicht-Nutzsignalanteil beruhenden Nutzsignalstroms (I_{N}), und
- eine Fremdlichtkompensationsschaltung (19), der der Nutzsignalstrom (I_{N}) zugeführt wird,
wobei
die Fremdlichtkompensationsschaltung (19)
- einen Taktgenerator (20),
- einen Demodulator (21) zur taktsynchronen Auswertung des Nutzsignalstroms (I_{N}),
- einen Modulator (22) zur Erzeugung eines Nutzsignalsteuerstroms (I_{NS}) für die Nutzsignallichtquelle (17),
- einen Modulator (33) zur Erzeugung eines Kompensationssignalsteuerstroms (I_{KS}) für die Kompensationslichtquelle (18), und
- eine Reglereinheit (24) zur Erzeugung wenigstens eines Ansteuersignals für wenigstens einen der Modulatoren (22, 23)
umfasst,
die Kompensationslichtquelle (18) durch Steuerung des Kompensationssignalsteuerstroms in ihrer Lichtintensität in Amplitude und Phase mittels der Reglereinheit (24) derart regelbar ist, dass der zwischen unterschiedlichen Phasen auftretende taktsynchrone WechsellichtNutzsignalanteil zu Null wird,
**gekennzeichnet durch**
- eine Kopplungseinheit (3) zum Trennen des Nutzsignalstroms (I_{N}) von einem Fremdlichtstrom (I_{F}), der von dem in dem Licht enthaltenen Fremdlichtanteil erzeugt wird,
- eine Energiespeichereinheit (5), die wenigstens einen Kondensator (7) einschließt und die **durch** den Fremdlichtstrom (I_{F}) geladen wird, wobei die in der Energiespeichereinheit (5) geladene Energie zur wenigstens teilweisen Energieversorgung der optoelektronischen Messanordnung (16) verwendet wird.

13. Optoelektronische Messanordnung nach Anspruch 12, **dadurch gekennzeichnet, dass** die Nutzsignallichtquelle (17) und/oder die Kompensationslichtquelle (18) eine LED ist.

14. Verfahren zur Speicherung elektrischer, aus Fremdlicht gewonnener Energie und zum Empfang optischer Wechsellichtnutzsignale mit einem optischen Empfänger (1) zum Empfang von Licht, das einen Wechsellicht-Nutzsignalanteil und einen Fremdlichtanteil umfasst, wobei der optische Empfänger (1) eine Photodiode (2), eine Kopplungseinheit (3), eine Verstärkereinheit (4) und eine Energiespeichereinheit (5) einschließt,
umfassend die folgenden Schritte:
- Empfangen von Licht mittels der Photodiode (2) des optischen Empfängers (1) und Umwandeln in einen elektrischen Photostrom (I_{P}), der einen auf dem optischen Wechsellichtnutzsignalanteil beruhendes Nutzsignalstrom (I_{N}) und einen auf dem Fremdlichtanteil beruhende Fremdlichtstrom (I_{F}) umfasst,
- Trennen des elektrischen Nutzsignalstroms (I_{N}) von dem elektrischen Fremdlichtstrom (I_{F}) mittels der Kopplungseinheit (3),
- Verstärken des Nutzsignalstroms (I_{N}) mittels der Verstärkereinheit (4) und Bereitstellen für eine Auswerteeinheit zur Weiterverarbeitung,
- Laden der Energiespeichereinheit (5) mittels des Fremdlichtstroms (I_{F}), wobei die Energiespeichereinheit (5) wenigstens einen Kondensator (7) aufweist, der durch den Fremdlichtstrom (I_{F}) aufgeladen wird,
- Bereitstellen und Verwenden der in der Energiespeichereinheit (5) gespeicherten Energie zur wenigstens teilweisen Energieversorgung des optischen Empfängers (1).
